(19) Europäisches Patentamt European Patent Office Office européen des brevets

(11) **EP 4 756 552 A1**

(12) **EUROPEAN PATENT APPLICATION**

(43) Date of publication:
**10.06.2026  Bulletin 2026/24**

(21) Application number: **25217760.5**

(22) Date of filing: **21.11.2025**

(51) International Patent Classification (IPC):
**G05D 1/227** (2024.01)    **G05D 1/243** (2024.01)
**G05D 1/85** (2024.01)    **G05D 105/80** (2024.01)
**G05D 107/70** (2024.01)    **G05D 109/25** (2024.01)
**G08G 5/22** (2025.01)    **G08G 5/265** (2025.01)
**G08G 5/32** (2025.01)    **G08G 5/53** (2025.01)
**G08G 5/54** (2025.01)    **G08G 5/55** (2025.01)
**G08G 5/57** (2025.01)    **G08G 5/59** (2025.01)
**B64U 10/00** (2023.01)    **B64U 70/92** (2023.01)
**B64U 80/20** (2023.01)    **B64U 80/25** (2023.01)

(52) Cooperative Patent Classification (CPC):
**G05D 1/852; B64U 10/00; B64U 70/92;**
**B64U 80/20; B64U 80/25; G05D 1/2278;**
**G05D 1/243; G08G 5/22; G08G 5/265; G08G 5/32;**
**G08G 5/53; G08G 5/55; G08G 5/57; G08G 5/59;**
B64U 2101/30;    (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority:  **04.12.2024  CN 202411773506**

(71) Applicant: **Autel Robotics Co., Ltd.**
**Shenzhen, Guangdong 518055 (CN)**

(72) Inventor: **JING, XueYing**
**Shenzhen, Guangdong, 518055 (CN)**

(74) Representative: **Gulde & Partner**
**Patent- und Rechtsanwaltskanzlei mbB**
**Berliner Freiheit 2**
**10785 Berlin (DE)**

(54) **RETURN PATH FOR INSPECTION UNMANNED AERIAL VEHICLE, UNMANNED AERIAL VEHICLE AND COMPUTER-READABLE STORAGE MEDIUM**

(57)    The present application discloses an unmanned aerial vehicle returning method, comprising:
- obtaining returning trigger information generated when an unmanned aerial vehicle inspects a target power line
- in response to the returning trigger information, determining a pole tower that satisfies a preset returning condition in a plurality of pole towers as a target pole tower, where the target power line includes a plurality of pole towers deployed along the line
- determining, based on the target pole tower, that a pole tower that the unmanned aerial vehicle passes by in an inspection process is an intermediate pole tower
- generating a returning path based on location information of the target pole tower and location information of at least one of the intermediate pole tower
- controlling, based on the returning path, the unmanned aerial vehicle to perform a returning operation.
The returning path is associated with pole towers which are relatively safe location points. Therefore, the returning path reduces a probability that the unmanned aerial vehicle collides with an obstacle during returning.

FIG. 4

(52) Cooperative Patent Classification (CPC): (Cont.)
   B64U 2101/31; B64U 2201/10; G05D 2105/89;
   G05D 2107/75; G05D 2109/254; G08G 5/54

**Description**

**TECHNICAL FIELD**

Embodiments of the present application relate to the field of unmanned aerial vehicle technologies, and in particular, to an unmanned aerial vehicle returning method, an unmanned aerial vehicle and a computer-readable storage medium.

**BACKGROUND**

Unmanned aerial vehicles are usually used to inspect electric power lines, to check whether abnormal parts exist in the electric power lines. In an inspection process, when a battery level of the unmanned aerial vehicle is insufficient, the unmanned aerial vehicle needs to return according to a returning path to be charged. In a related technology, a linear path formed by a location point at which the unmanned aerial vehicle starts to return and a takeoff point is directly used as the returning path, and then the unmanned aerial vehicle is controlled to return according to the returning path. However, safety of this type of returning path is relatively low. When returning according to the returning path, the unmanned aerial vehicle easily encounters obstacles. In this way, the unmanned aerial vehicle easily collides with the obstacles, causing a returning failure.

**SUMMARY**

An objective of embodiments of the present application is to provide an unmanned aerial vehicle returning method, an unmanned aerial vehicle, and a computer-readable storage medium, to resolve the technical problem that the returning safety is not high in the related technology.

According to a first aspect, an embodiment of the present application provides an unmanned aerial vehicle returning method, including:

> obtaining returning trigger information generated when an unmanned aerial vehicle inspects a target power line, where the target power line includes a plurality of pole towers deployed along the line;
> in response to the returning trigger information, determining a pole tower that satisfies a preset returning condition in the plurality of pole towers as a target pole tower;
> determining, based on the target pole tower, that a pole tower that the unmanned aerial vehicle passes by in an inspection process is an intermediate pole tower;
> generating a returning path based on location information of the target pole tower and location information of at least one of the intermediate pole tower; and
> controlling, based on the returning path, the unmanned aerial vehicle to perform a returning operation.

Optionally, the in response to the returning trigger information, determining a pole tower that satisfies a preset returning condition in the plurality of pole towers as a target pole tower includes:

> in response to the returning trigger information, obtaining an initial battery level of the unmanned aerial vehicle before inspection;
> determining a flying range based on the initial battery level;
> determining a farthest location point of the unmanned aerial vehicle on the target power line based on the flying range;
> determining a pole tower closest to the farthest location point and close to a takeoff point of the unmanned aerial vehicle as a candidate pole tower, where the preset returning condition is restricted by the candidate pole tower; and
> determining, based on the candidate pole tower, a pole tower that satisfies the preset returning condition as the target pole tower.

Optionally, the determining, based on the candidate pole tower, a pole tower that satisfies the preset returning condition as the target pole tower includes:

> determining a current pole tower, where the current pole tower is a pole tower that the unmanned aerial vehicle currently passes through;
> determining whether location information of the current pole tower matches location information of the candidate pole tower; and
> if the location information of the current pole tower matches the location information of the candidate pole tower, determining that the current pole tower is the candidate pole tower, that the candidate pole tower satisfies the preset returning condition, and that the candidate pole tower is the target pole tower; or

if the location information of the current pole tower does not match the location information of the candidate pole tower, obtaining a real-time battery level change curve when the unmanned aerial vehicle reaches the current pole tower, and determining, based on the real-time battery level change curve and a preset battery level change curve, a pole tower that satisfies the preset returning condition as the target pole tower.

Optionally, the determining, based on the real-time battery level change curve and a preset battery level change curve, a pole tower that satisfies the preset returning condition as the target pole tower includes:

determining a deviation degree value between the real-time battery level change curve and a preset battery level change curve; and

if the deviation degree value is less than or equal to a preset degree threshold, determining that the candidate pole tower is a pole tower that satisfies the preset returning condition, and that the candidate pole tower is the target pole tower; or

if the deviation degree value is greater than a preset degree threshold, determining, based on a preset filtering condition, a pole tower that satisfies the preset returning condition as the target pole tower.

Optionally, the determining, based on a preset filtering condition, a pole tower that satisfies the preset returning condition as the target pole tower includes:

determining whether an $i^{th}$ pole tower and an $(i+1)^{th}$ pole tower satisfy the following formula:

$$Q - 2(Q - q_i) > 0$$

$$Q - 2(Q - k_{i+1}) < 0$$

$$k_{i+1} = q_i + \Delta k$$

if the $i^{th}$ pole tower and the $(i+1)^{th}$ pole tower satisfy the following formula, determining the $i^{th}$ pole tower as the target pole tower, where

the $i^{th}$ pole tower is the current pole tower and the $(i+1)^{th}$ pole tower is a pole tower arranged after the current pole tower according to an inspecting direction of the unmanned aerial vehicle, $Q$ being an initial battery level, $q_i$ being a remaining battery level when the unmanned aerial vehicle flies to the $i^{th}$ pole tower, $k_{i+1}$ being a remaining battery level when the unmanned aerial vehicle flies to the $(i+1)^{th}$ pole tower in a normal environment situation, and $\Delta k$ being a battery level required for the unmanned aerial vehicle to fly from the $i^{th}$ pole tower to the $(i+1)^{th}$ pole tower in the normal environment situation.

Optionally, the generating a returning path based on location information of the target pole tower and location information of at least one of the intermediate pole tower includes:

searching all passed pole towers for passed pole towers that are in a normal environment and satisfy a preset density condition as reference pole towers, where the target pole tower and the intermediate pole tower are both passed pole towers;

generating a target linear path based on location information of the reference pole towers, where the target linear path is a local linear path that is the shortest when a preset safety condition is satisfied, the target linear path being obtained through constraint by at least one first pole tower, the first pole tower being a pole tower in the reference pole towers, and a pole tower other than all the first pole towers in all the passed pole towers being a second pole tower; and

generating the returning path based on location information of the second pole tower and the target linear path.

Optionally, the generating a target linear path based on location information of the reference pole towers includes:

generating a candidate linear path by fitting the location information of the reference pole towers, where the candidate linear path can be divided into a plurality of path segments by the reference pole towers;

checking, in sequence based on a returning direction, whether a target path segment satisfies the preset safety condition, where the target path segment is one of the plurality of path segments; and

if the target path segment satisfies the preset safety condition, selecting, based on the returning direction, a path segment arranged after the target path segment as a new target path segment; or

if the target path segment does not satisfy the preset safety condition, forming, based on a direction opposite to the returning direction, path segments arranged before the target path segment into the target linear path.

Optionally, the target path segment is obtained through constraint by a first reference pole tower and a second reference pole tower, and the checking, in sequence based on a returning direction, whether a target path segment satisfies the preset safety condition includes:

determining a first vertical distance from the first reference pole tower to the candidate linear path and a second vertical distance from the second reference pole tower to the candidate linear path;

determining whether the first vertical distance is less than a preset distance threshold and whether the second vertical distance is less than the preset distance threshold; and

if the first vertical distance and the second vertical distance are both less than the preset distance threshold, determining that the target path segment satisfies the preset safety condition; or

if either the first vertical distance or the second vertical distance is not less than the preset distance threshold, determining that the target path segment does not satisfy the preset safety condition.

Optionally, each of the passed pole towers is configured with an environment status identifier, and the searching all passed pole towers for passed pole towers that are in a normal environment and satisfy a preset density condition as reference pole towers includes:

searching all the passed pole towers for passed pole towers whose environment status identifiers are normal state identifiers as to-be-determined pole towers;

placing at least more than two to-be-determined pole towers whose pole tower sequence numbers are consecutive in a corresponding preset queue;

determining a quantity of to-be-determined pole towers included in each of the preset queue; and

deleting a preset queue whose quantity is less than a preset quantity threshold, and reserving a preset queue whose quantity exceeds the preset quantity threshold as a target queue, where to-be-determined pole towers in the target queue satisfy the preset density condition and the to-be-determined pole towers in the target queue are the reference pole towers.

According to a second aspect, an embodiment of the present application provides an unmanned aerial vehicle, including:

a body;

an arm, connected to the body;

a wing, disposed on the arm and configured to provide flying power for the unmanned aerial vehicle;

a sensor module, disposed on the body and configured to collect sensor data;

an aircraft communication module, disposed on the body; and

a flying control module, including a memory and a processor, where the processor is communicatively connected to the sensor module, the aircraft communication module and the memory separately, the processor being configured to execute one or more computer programs stored in the memory, and when executing the one or more computer programs, the processor causing the unmanned aerial vehicle to implement the foregoing unmanned aerial vehicle returning method.

According to a third aspect, an embodiment of the present application provides a computer-readable storage medium, the computer-readable storage medium having a computer program stored therein, the computer program including program instructions, and when executed by a processor, the program instructions causing the processor to perform the foregoing unmanned aerial vehicle returning method.

The following technical effects can be achieved in the embodiments of the present application: obtaining returning trigger information generated when an unmanned aerial vehicle inspects a target power line, where the target power line includes a plurality of pole towers deployed along the line; and in response to the returning trigger information, determining a pole tower that satisfies a preset returning condition in the plurality of pole towers as a target pole tower. Next, in the embodiments of the present application, it is determined, based on the target pole tower, that a pole tower that the unmanned aerial vehicle passes by in an inspection process is an intermediate pole tower. In other words, the intermediate pole tower is an intermediate path point of the returning path. Then, in the embodiments of the present application, a returning path is generated based on location information of the target pole tower and location information of at least one of the intermediate pole tower; and the unmanned aerial vehicle is controlled, based on the returning path, to perform a returning operation. The returning path provided in the embodiments of the present application is associated with pole towers. Usually, the pole towers are relatively safe location points. Therefore, the returning path provided in the embodiments of the present application is relatively safe, which can reduce a probability that the unmanned aerial vehicle collides with an obstacle during returning, thereby helping improve safety of returning flight of the unmanned aerial vehicle.

## BRIEF DESCRIPTION OF THE DRAWINGS

To describe the technical solutions in the embodiments of the present application more clearly, the following briefly introduces the accompanying drawings required for describing the embodiments. Apparently, the accompanying drawings in the following descriptions show only some embodiments of the present application, and a person of ordinary skill in the art may still derive other drawings from these accompanying drawings without creative efforts.

FIG. 1 is a schematic diagram of a system architecture of an unmanned aerial vehicle returning system according to an embodiment of the present application;
FIG. 2a is a schematic diagram of a first state of a task creation page according to an embodiment of the present application, where a user is creating a flight task on the task creation page;
FIG. 2b is a schematic diagram of a second state of a task creation page according to an embodiment of the present application;
FIG. 3 is a schematic diagram of a circuit structure of an unmanned aerial vehicle according to an embodiment of the present application;
FIG. 4 is a schematic flowchart of an unmanned aerial vehicle returning method according to an embodiment of the present application;
FIG. 5 is a schematic diagram of an unmanned aerial vehicle inspecting along a target power line according to an embodiment of the present application;
FIG. 6 is a schematic diagram of planning a returning path according to an embodiment of the present application;
FIG. 7 is a schematic diagram of a structure of an unmanned aerial vehicle returning apparatus according to an embodiment of the present application; and
FIG. 8 is a schematic diagram of a structure of an unmanned aerial vehicle according to an embodiment of the present application.

## DETAILED DESCRIPTION

To make the objectives, technical solutions and advantages of the present application clearer, the following further describes the present application in detail with reference to the accompanying drawings and the embodiments. It should be understood that, the specific embodiments described herein are merely used for describing the present application and are not used for limiting the present application. All other embodiments obtained by a person of ordinary skill in the art based on the embodiments of the present application without creative efforts shall fall within the protection scope of the present application.

It should be noted that, if there are no conflicts, the features in the embodiments of the present application may be combined with each other and all fall within the protection scope of the present application. In addition, although functional modules are divided in the schematic diagram of the apparatus or a logic sequence is shown in the flowchart, in some cases, the shown or described steps may be performed in a sequence different from the module division in the apparatus or the sequence in the flowchart. In addition, words such as "first", "second" and "third" used in the present application do not limit data and an execution order, but are used only to distinguish the same items or similar items with basically the same functions and effects.

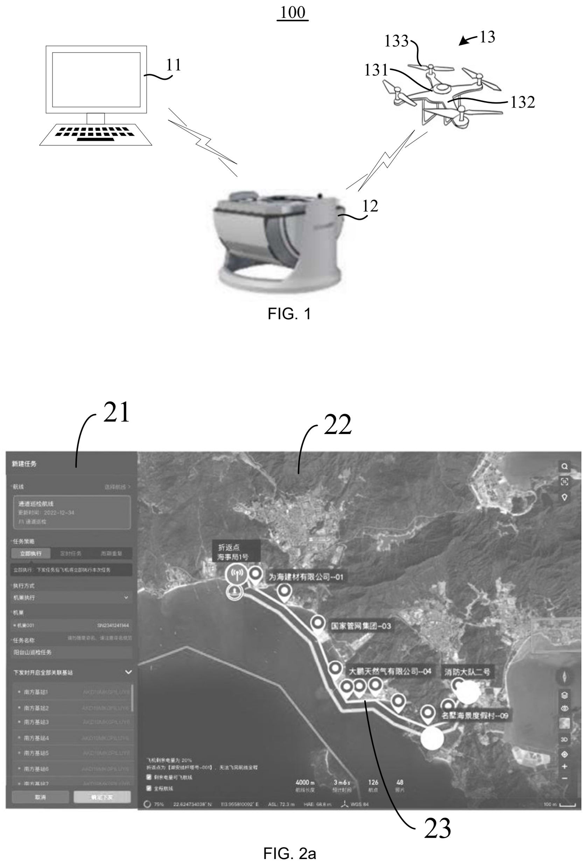

An embodiment of the present application provides an unmanned aerial vehicle returning system. Referring to FIG. 1, the unmanned aerial vehicle returning system 100 includes a command center device 11, a nest 12 and an unmanned aerial vehicle 13.

The command center device 11 is in communication connection with the nest 12, and is configured to control the nest 12 and the unmanned aerial vehicle 13. The communication connection includes a wireless connection and a wired connection. The wireless connection may be 2G, 3G, 4G, 5G, 6G, Wi-Fi, Bluetooth or the like. The wired connection includes an Ethernet connection, an optical connection and the like.

The command center device 11 can plan line information of a target power line for the unmanned aerial vehicle 13 and send the line information of the target power line to the unmanned aerial vehicle 13 through the nest 12. The unmanned aerial vehicle 13 stores the line information of the target power line. It may be understood that the command center device 11 may be an electronic device such as a tablet computer, a desktop computer, a server or a mobile phone.

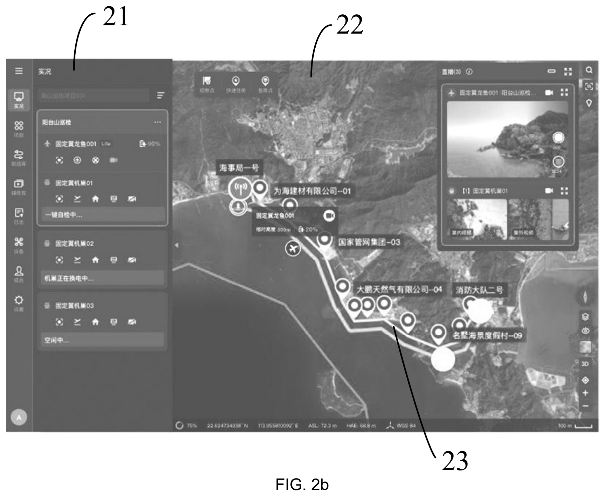

The command center device 11 is configured with a display screen. The display screen is configured to present various types of pages related to the unmanned aerial vehicle. Referring to FIG. 2a and FIG. 2b together, the display screen presents a task creation page 200. The task creation page 200 includes a task creation bar 21 and a map presentation area 22. The task creation bar 21 is used for interacting with a user to create a flight task. The map presentation area 22 is used for presenting a flight map and present, on the flight map, an inspection path corresponding to the flight task. Different inspection paths correspond to different power lines.

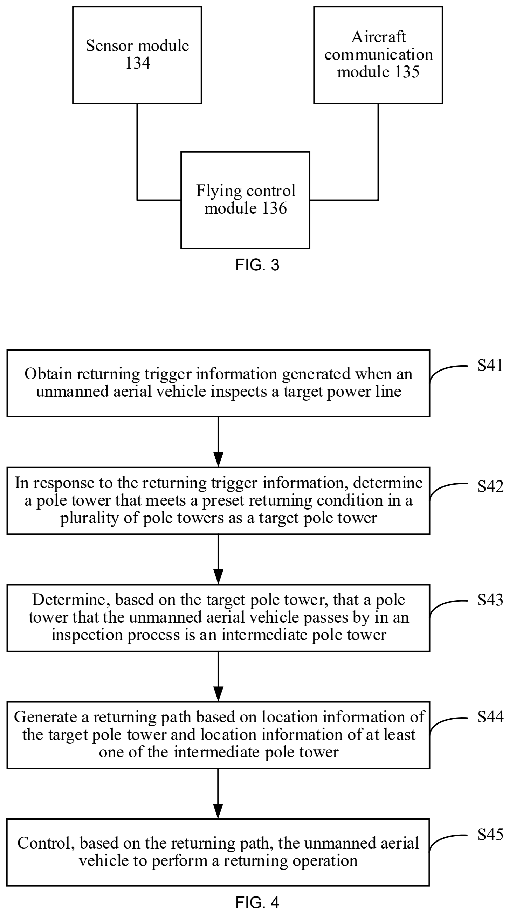

Still referring to FIG. 2a, the user may select an inspection route of the flight task from the task creation bar 21. The inspection route corresponds to the power line. After the user completes parameter setting of the flight task in the task creation bar 21, the command center device 11 presents an inspection route 23 of the flight task in the map presentation area 22 and issues the flight task to the nest 12. The nest 12 sends the flight task to the unmanned aerial vehicle 13. After receiving the flight task, the unmanned aerial vehicle 13 starts to inspect the target power line according to the inspection route 23 of the flight task. As shown in FIG. 3, the user may view a flight status of the unmanned aerial vehicle 13 in real time on the command center device 11.

The nest 12 is in communication connection with the unmanned aerial vehicle 13 and is configured to place the unmanned aerial vehicle 13, to satisfy takeoff, landing, battery swapping, and charging requirements of the unmanned aerial vehicle 13. The nest 12 generally includes a cabinet and a cover. The cabinet and the cover form a closed space. The unmanned aerial vehicle 13 can be protected from the sun and the rain when being placed in the closed space. The nest 12 may further include a charging module configured to charge the unmanned aerial vehicle 13 when the unmanned aerial vehicle is placed therein.

The unmanned aerial vehicle 13 is configured to receive a command sent by the nest 12 and perform a corresponding action according to the command. For example, the unmanned aerial vehicle 13 receives a task command sent by the nest 12 and executes a flight task according to the task command, or the unmanned aerial vehicle 13 receives a landing command sent by the nest 12 and lands according to the landing command, or the unmanned aerial vehicle 13 receives a returning command sent by the nest 12 and returns according to the returning command. The unmanned aerial vehicle 13 is further configured to: during inspection, perform photographing detection on the power line and transmit obtained image information or video information to the nest 12, so that the nest 12 sends the obtained image information or video information to the command center device 11.

With reference to FIG. 1 and FIG. 3, the unmanned aerial vehicle 13 includes a body 131, an arm 132, a wing 133, a sensor module 134, an aircraft communication module 135 and a flying control module 136.

The body 131 is used as a body of the unmanned aerial vehicle 13 and is configured to carry various components. The arm 132 is connected to the body 131. The wing 133 is disposed on the arm 132 and is configured to provide flying power for the unmanned aerial vehicle.

The sensor module 134 is disposed on the body 131 and is configured to collect sensor data. The sensor module 134 includes a radar, a camera, a gyroscope, an accelerometer and the like.

The aircraft communication module 135 is configured to be communicatively connected to the command center device 11 and the nest 12 separately. The aircraft communication module 135 includes an image transmission module, a Bluetooth module, a Wi-Fi module, a 6G module, a 5G module, a 4G module, a 3G module or a 2G module.

The flying control module 136 is separately electrically connected to the sensor module 134 and the aircraft communication module 135 and is configured to control a flying status of the unmanned aerial vehicle 13.

It may be understood that, the unmanned aerial vehicle 13 is an unmanned aerial vehicle of any power-driven type, including, but not limited to, a tiltrotor unmanned aerial vehicle, a fixed-wing unmanned aerial vehicle, a paraglider unmanned aerial vehicle, a flapping-wing unmanned aerial vehicle, a helicopter model and the like. The unmanned aerial vehicle 13 may have a corresponding volume or power according to requirements of actual situations, to provide a load carrying capability, a flying speed, a flying range and the like that can satisfy use requirements.

In another aspect of the embodiments of the present application, an embodiment of the present application provides an unmanned aerial vehicle returning method. Referring to FIG. 4, the unmanned aerial vehicle returning method includes the following steps:

S41: Obtain returning trigger information generated when an unmanned aerial vehicle inspects a target power line.

In this step, the target power line is a power line that the unmanned aerial vehicle needs to inspect and the target power line includes a plurality of pole towers deployed along the line. The unmanned aerial vehicle receives a flight task sent by a nest, obtains line information of a target inspection path by parsing the flight task, and inspects the target power line based on the line information of the target inspection path. The line information of the target inspection path includes location information of pole towers and a connection line between the pole towers is the target power line.

The returning trigger information is information for triggering the unmanned aerial vehicle to perform a returning operation.

In some embodiments, when the unmanned aerial vehicle inspects the target power line, a battery level of the unmanned aerial vehicle is obtained, and whether the battery level is less than or equal to a preset battery level threshold is determined. If the battery level is less than or equal to the preset battery level threshold, the returning trigger information is generated; or if the battery level is greater than the preset battery level threshold, flight continuation information is generated, where the flight continuation information is used for indicating that the unmanned aerial vehicle continues the flight.

In some embodiments, when the unmanned aerial vehicle inspects the target power line, whether a returning command sent by the nest is received is detected. If the returning command sent by the nest is received, the returning trigger information is generated; or if the returning command sent by the nest is not received, flight continuation information is generated.

S42: In response to the returning trigger information, determine a pole tower that satisfies a preset returning condition in the plurality of pole towers as a target pole tower.

In this step, the preset returning condition is a condition for screening out, from the plurality of pole towers, a pole tower used as a starting point for returning. If the unmanned aerial vehicle can return to a takeoff point when starting to return from the closest pole tower corresponding to a current battery level which the unmanned aerial vehicle has not passed by, the pole tower satisfies the preset returning condition. If the unmanned aerial vehicle cannot return to the takeoff point when starting to return from the closest pole tower corresponding to the current battery level which the unmanned aerial vehicle has not passed by, the pole tower does not satisfy the preset returning condition.

The in response to the returning trigger information, determining a pole tower that satisfies a preset returning condition in the plurality of pole towers as a target pole tower includes: in response to the returning trigger information, obtaining an initial battery level of the unmanned aerial vehicle before inspection; determining a flying range based on the initial battery level; determining a farthest location point of the unmanned aerial vehicle on the target power line based on the flying range; determining a pole tower closest to the farthest location point and close to a takeoff point of the unmanned aerial vehicle as a candidate pole tower, where the preset returning condition is restricted by the candidate pole tower; and determining, based on the candidate pole tower, a pole tower that satisfies the preset returning condition as the target pole tower. The candidate pole tower is the farthest pole tower from which the unmanned aerial vehicle can return normally in a normal environment state. The candidate pole tower is used as a critical pole tower of the returning path in the embodiments of the present application, which is beneficial to ensuring that the unmanned aerial vehicle can reliably find the target pole tower in face of various uncertain environment states, to improve returning safety and reliability.

The initial battery level is a battery level of the unmanned aerial vehicle before the flight, and the obtaining an initial battery level of the unmanned aerial vehicle before inspection includes the following step: in response to the flight task received by the unmanned aerial vehicle, controlling the unmanned aerial vehicle to access a battery module of the unmanned aerial vehicle, to obtain a current battery level of the battery module, where the current battery level of the battery module is the initial battery level.

The flying range is a maximum flying distance when the unmanned aerial vehicle performs inspection when a returning condition is satisfied. The determining a flying range based on the initial battery level includes the following steps: obtaining a preset inspecting speed of the unmanned aerial vehicle; determining an battery level change relationship corresponding to the preset inspecting speed, where the battery level change relationship is a relationship of a change of the battery level of the unmanned aerial vehicle with time while the preset inspecting speed is unchanged; determining a maximum flying time based on the battery level change relationship and the initial battery level; and multiplying the preset inspecting speed by the maximum flight time, to obtain the flying range.

The determining a farthest location point of the unmanned aerial vehicle on the target power line based on the flying range includes the following steps: determining a target distance consistent with the flying range on the target power line, where the target distance is obtained through constraint by a first endpoint and a second endpoint, the first endpoint being the 1st pole tower of the target power line, and the second endpoint being the farthest location point.

In some embodiments, the determining, based on the candidate pole tower, a pole tower that satisfies the preset returning condition as the target pole tower includes the following step: determining that the candidate pole tower is a pole tower that satisfies the preset returning condition, and that the candidate pole tower is the target pole tower.

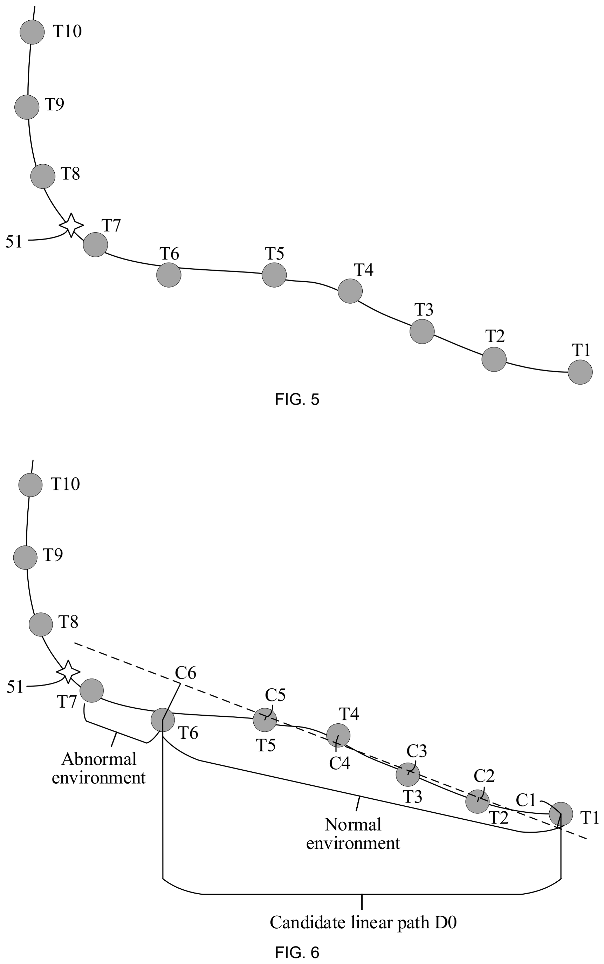

Referring to FIG. 5, a target power line 50 includes a plurality of pole towers. The unmanned aerial vehicle 13 starts to perform the returning operation at a location not far away from a pole tower T7. The farthest location point of the unmanned aerial vehicle is a location point 51. The pole tower T7 is a pole tower closest to the farthest location point 51 and close to the takeoff point (namely, the nest 12). Therefore, the pole tower T7 is the candidate pole tower.

It may be understood that when a flying environment encountered by the unmanned aerial vehicle in the inspection process is friendly, the unmanned aerial vehicle may directly use the candidate pole tower as the target pole tower. When the flying environment encountered by the unmanned aerial vehicle in the inspection process is relatively harsh, the harsh environment may cause the unmanned aerial vehicle to consume more battery power relative to a pre-planned situation. If the unmanned aerial vehicle uses the candidate pole tower as the target pole tower and uses the target pole tower as a starting point for returning, when inspecting the candidate pole tower, the unmanned aerial vehicle has consumed more battery power relative to the pre-planned situation. Therefore, when returning, the unmanned aerial vehicle may easily lack a sufficient amount of battery power to return to the nest for charging.

In some embodiments, different from the foregoing embodiments, the determining, based on the candidate pole tower, a pole tower that satisfies the preset returning condition as the target pole tower includes the following step:

determining a current pole tower, where the current pole tower is a pole tower that the unmanned aerial vehicle currently passes through; determining whether location information of the current pole tower matches location information of the candidate pole tower; and if the location information of the current pole tower matches the location information of the candidate pole tower, determining that the current pole tower is the candidate pole tower, that the candidate pole tower satisfies the preset returning condition, and that the candidate pole tower is the target pole tower; or if the location information of the current pole tower does not match the location information of the candidate pole tower, obtaining a real-time battery level change curve when the unmanned aerial vehicle reaches the current pole tower, and determining, based on the real-time battery level change curve and a preset battery level change curve, a pole tower that satisfies the preset returning condition as the target pole tower.

The candidate pole tower is used as the critical pole tower of the returning path in the embodiments of the present application. In this way, whether a current pole tower that is arranged before the candidate pole tower and that is currently passed by is the candidate pole tower can be determined in real time. If the current pole tower is the candidate pole tower, it indicates that the unmanned aerial vehicle cannot continue to perform inspection and needs to return using the candidate pole tower as the target pole tower. If the current pole tower is not the candidate pole tower, it indicates that the unmanned aerial vehicle has not reached the candidate pole tower. Because a severe external environment affects battery power consumption of the unmanned aerial vehicle, in the embodiments of the present application, before the unmanned aerial vehicle reaches the candidate pole tower, battery level information of the unmanned aerial vehicle is tracked in real time, and the target pole tower is determined based on a real-time battery level change curve and a preset battery level change curve. In this way, the impact of the severe external environment can be resisted, and a safe and reliable starting point (that is, the target pole tower) for returning can be found, thereby helping the unmanned aerial vehicle to return securely and reliably.

The determining, based on the real-time battery level change curve and a preset battery level change curve, a pole tower that satisfies the preset returning condition as the target pole tower includes the following step: determining a deviation degree value between the real-time battery level change curve and a preset battery level change curve; and if the deviation degree value is less than or equal to a preset degree threshold, determining that the candidate pole tower is a pole tower that satisfies the preset returning condition, and that the candidate pole tower is the target pole tower; or if the deviation degree value is greater than a preset degree threshold, determining, based on a preset filtering condition, a pole tower that satisfies the preset returning condition as the target pole tower. The severe external environment increases the battery power consumption of the unmanned aerial vehicle, causing the real-time battery level change curve of the unmanned aerial vehicle to deviate from the preset battery level change curve in a normal environment, and further affecting selection of the target pole tower. Generally, the impact is presented in a way that the target pole tower is before the candidate pole tower. The unmanned aerial vehicle monitors a comparison result between the real-time battery level change curve and the preset battery level change curve, to retrodict whether the unmanned aerial vehicle is in a severe external environment, and further trigger the unmanned aerial vehicle to enter a procedure of precisely determining the target pole tower. In this way, impact brought by the severe external environment on selection of the target pole tower can be resisted, and the target pole tower can be found reliably.

The real-time battery level change curve is used for representing a change status of a battery level of the unmanned aerial vehicle for inspecting the target power line in a current environment, and the preset battery level change curve is used for representing a change status of the battery level of the unmanned aerial vehicle for inspecting the target power line in the normal environment.

It may be understood that, if the current environment is the normal environment, the real-time battery level change curve is relatively consistent with the preset battery level change curve or a deviation between the two is not large. If the current environment is relatively harsh, the unmanned aerial vehicle needs to consume more battery power in a process of passing through the relatively harsh environment. In this way, the deviation between the real-time battery level change curve and the preset battery level change curve is relatively large.

The deviation degree value is used for representing similarity between the real-time battery level change curve and the preset battery level change curve. In the embodiments of the present application, the deviation degree value between the real-time battery level change curve and the preset battery level change curve is obtained based on a preset curve similarity algorithm. The preset curve similarity algorithm includes a Euclidean distance algorithm, a dynamic time warping (DTW) algorithm, a Frechet distance algorithm, and the like.

If the deviation degree value is less than or equal to the preset degree threshold, it indicates that the current environment of the unmanned aerial vehicle is the normal environment. Therefore, in the embodiments of the present application, a specified candidate pole tower can be used as the target pole tower. If the deviation degree value is greater than the preset degree threshold, it indicates that the current environment of the unmanned aerial vehicle is a harsh environment. Therefore, in the embodiments of the present application, the target pole tower needs to be determined based on the preset filtering condition.

In the embodiments of the present application, when it is determined, based on the preset filtering condition, that a pole tower satisfying the preset returning condition is the target pole tower, whether an $i^{th}$ pole tower and an $(i+1)^{th}$ pole tower satisfy the following formula is determined:

$$Q - 2\left(Q - q_i\right) > 0$$

$$Q - 2\left(Q - k_{i+1}\right) < 0$$

$$k_{i+1} = q_i + \Delta k$$

if the ith pole tower and the (i+1)th pole tower satisfy the foregoing formula, it is determined that the ith pole tower is the target pole tower; if the ith pole tower and the (i+1)th pole tower do not satisfy the foregoing formula, the step of determining the current pole tower is performed.

The ith pole tower is the current pole tower and the (i+1)th pole tower is a pole tower arranged after the current pole tower according to an inspecting direction of the unmanned aerial vehicle, $Q$ being an initial battery level, $q_i$ being a remaining battery level when the unmanned aerial vehicle flies to the ith pole tower, $k_{i+1}$ being a remaining battery level when the unmanned aerial vehicle flies to the (i+1)th pole tower in a normal environment situation, and $\Delta k$ being a battery level required for the unmanned aerial vehicle to fly from the ith pole tower to the (i+1)th pole tower in the normal environment situation.

For example, still referring to FIG. 5, the unmanned aerial vehicle starts to inspect the target power line from a pole tower T1. When the unmanned aerial vehicle inspects the target power line in the normal environment, remaining battery levels of the unmanned aerial vehicle at different pole towers are shown in Table 1:

Table 1

| Pole tower | T1 | T2 | T3 | T4 | T5 | T6 | T7 | T8 | T9 | T10 |
|---|---|---|---|---|---|---|---|---|---|---|
| Remaining battery level (%) | 100 | 95 | 90 | 80 | 75 | 70 | 60 | 50 | 40 | 30 |

It can be known from Table 1 that when the unmanned aerial vehicle inspects the target power line in the normal environment, when the unmanned aerial vehicle flies to the pole tower T8, a remaining battery level is 50%. To ensure that the unmanned aerial vehicle can return normally, the unmanned aerial vehicle needs to start returning using the pole tower T8 as the starting point for returning, that is, the pole tower T8 is the target pole tower.

When the unmanned aerial vehicle encounters an abnormal environment in the inspection process, remaining battery levels of the unmanned aerial vehicle at different pole towers are shown in Table 2:

Table 2

| Pole tower | T1 | T2 | T3 | T4 | T5 | T6 | T7 | T8 | T9 | T10 |
|---|---|---|---|---|---|---|---|---|---|---|
| Remaining battery level (%) | 100 | 95 | 90 | 80 | 75 | 70 | 55 | 45 | 35 | 25 |

A vertical air flow exists near the pole tower T7. Surrounding environments of other pole towers are relatively normal. When the unmanned aerial vehicle flies to the pole tower T7, the unmanned aerial vehicle needs to consume more battery power. Consequently, the remaining battery level of the unmanned aerial vehicle at the pole tower T7 is 55%. In comparison with the remaining battery level of 60% of the unmanned aerial vehicle at the pole tower T7 in the normal environment, the unmanned aerial vehicle consumes 5% more batter power. If the unmanned aerial vehicle returns in a normal returning manner, the unmanned aerial vehicle needs to fly to the pole tower T8 with the current remaining battery level of 55%, and then starts to return from the pole tower T8. Because the remaining battery level when the unmanned aerial vehicle flies to the pole tower T8 is 45%, and the remaining battery level of 45% cannot support the unmanned aerial vehicle to return to the takeoff point, to ensure that the unmanned aerial vehicle can successfully and normally return, the unmanned aerial vehicle cannot fly to the pole tower T8 and then perform the returning operation.

Based on the foregoing provided preset filtering condition, in the embodiments of the present application, whether the remaining battery level of the unmanned aerial vehicle at each pole tower satisfies the returning condition is detected in real time. For example, for the pole tower T2, $q_2$ is 95% and $k_3$ is 90%. 100-2(100-95)>0 but 100 - 2(100 - 90) > 0. Therefore, the pole tower T2 does not satisfy the condition. The rest may be deduced by analogy.

For the pole tower T7, $q_7$ is 55% and $k_8$ is 45%. 100-2(100-55) > 0 and 100 - 2(100 - 45) < 0. Therefore, the pole tower T7 satisfies the condition. Therefore, the pole tower T7 is the target pole tower.

In the embodiments of the present application, the foregoing manner is adopted, so that whether the remaining battery level when the unmanned aerial vehicle flies to each pole tower satisfies the returning condition can tracked and detected in real time, to reliably and safely control the unmanned aerial vehicle to perform the returning operation, thereby avoiding normal returning failure due to excessive flying.

S43: Determine, based on the target pole tower, that a pole tower that the unmanned aerial vehicle passes by in an inspection process is an intermediate pole tower.

In this step, the unmanned aerial vehicle determines a target sequence number of the target pole tower on the target power line, and determines a pole tower whose sequence number is before the target sequence number as an intermediate pole tower. With reference to FIG. 2, a sequence number of the pole tower T7 is T7, and the pole tower T1 to the pole tower T6 are all intermediate pole towers.

S44: Generate a returning path based on location information of the target pole tower and location information of at least one of the intermediate pole tower.

In this step, in some embodiments of the present application, the returning path is formed by connecting the target pole tower and all the intermediate pole towers in the embodiments of the present application. In some embodiments, the target pole tower and all the intermediate pole towers are used as constraint factors to generate the returning path in the embodiments of the present application.

S45: Control, based on the returning path, the unmanned aerial vehicle to perform a returning operation.

In this step, the unmanned aerial vehicle is controlled to fly according to the returning path, to return to the nest for charging in the embodiments of the present application. The returning path is associated with pole towers. Usually, the pole towers are relatively safe location points. Therefore, the returning path provided in the embodiments of the present application is relatively safe, which can reduce a probability that the unmanned aerial vehicle collides with an obstacle during returning, thereby helping improve safety of returning flight of the unmanned aerial vehicle.

It may be understood that, in the target power line, a path formed by the pole towers are relatively curved, causing a relatively large distance that the unmanned aerial vehicle needs to fly. Based on this, in some embodiments, the generating a returning path based on location information of the target pole tower, location information of at least one of the intermediate pole tower, location information of a head end pole tower and location information of the takeoff point includes the following steps:

> S441: Search all passed pole towers for passed pole towers that are in a normal environment and satisfy a preset density condition as reference pole towers, where the target pole tower and the intermediate pole tower are both passed pole towers.
> S442: Generate a target linear path based on location information of the reference pole towers.
> S443: Generate the returning path based on location information of the second pole tower and the target linear path.

In S441, the passed pole tower is a pole tower that the unmanned aerial vehicle passes through. Because the target pole tower and the intermediate pole tower are both passed by the unmanned aerial vehicle, the target pole tower and the intermediate pole tower are both passed pole towers.

Each passed pole tower is configured with an environment status identifier. The environment status identifier is used for indicating whether an environment from a previous pole tower to a next pole tower of the unmanned aerial vehicle is normal. The environment status identifier includes a normal state identifier and an abnormal state identifier. The normal state identifier is used for indicating that the environment from the previous pole tower to the next pole tower of the unmanned aerial vehicle is normal, and the abnormal state identifier is used for indicating that the environment from the previous pole tower to the next pole tower of the unmanned aerial vehicle is abnormal.

The searching all passed pole towers for passed pole towers that are in a normal environment and satisfy a preset density condition as reference pole towers includes the following steps: searching all the passed pole towers for passed pole towers whose environment status identifiers are normal state identifiers as to-be-determined pole towers; placing at least more than two to-be-determined pole towers whose pole tower sequence numbers are consecutive in a corresponding preset queue; determining a quantity of to-be-determined pole towers included in each of the preset queue; and deleting a preset queue whose quantity is less than a preset quantity threshold, and reserving a preset queue whose quantity exceeds the preset quantity threshold as a target queue, where to-be-determined pole towers in the target queue satisfy the preset density condition and the to-be-determined pole towers in the target queue are the reference pole towers.

For example, a pole tower group of the target power line $T_0 = \{T_1, T_2, T_3, ..., T_i, ... T_n\}$. $T_i$ is an $i^{th}$ pole tower, N being 20. The unmanned aerial vehicle encounters a vertical air flow on the flight from the pole tower $T_3$ to the pole tower $T_4$, encounters a vertical air flow again on the flight from the pole tower $T_9$ to the pole tower $T_{11}$, and further encounters heavy rain on the flight from the pole tower $T_{15}$ to the pole tower $T_{16}$. Therefore, environment status identifiers of the pole tower $T_4$, the pole tower $T_{11}$ and the pole tower $T_{16}$ are all abnormal state identifiers and environment status identifiers of other pole towers are all normal state identifiers. Therefore, the other pole towers are all to-be-determined pole towers.

In the embodiments of the present application, the pole tower $T_1$ to the pole tower $T_3$ are placed into a preset

queue $D_1$, that is, $D_1 = \{T_1, T_2, T_3\}$. The pole tower $T_5$ to the pole tower $T_{10}$ are placed into a preset queue $D_2$, that is, $D_2 = \{T_5, T_6, T_7, T_8, T_9, T_{10}\}$. The pole tower $T_{12}$ to the pole tower $T_{15}$ are placed into a preset queue $D_3$, that is, $D_3 = \{T_{12}, T_{13}, T_{14}, T_{15}\}$. The pole tower $T_{17}$ to the pole tower $T_{20}$ are placed into a preset queue $D_4$, that is, $D_4 = \{T_{17}, T_{18}, T_{19}, T_{20}\}$.

If the preset quantity threshold is 5, the preset queue $D_1$, the preset queue $D_3$, and the preset queue $D_4$ need to be deleted and the preset queue $D_2$ is reserved in the embodiments of the present application. The preset queue $D_2$ is the target queue. The pole tower $T_5$ to the pole tower $T_{10}$ all satisfy the preset density condition, and are all reference pole towers.

In S442, the target linear path is a local linear path that is the shortest when a preset safety condition is satisfied, the target linear path being obtained through constraint by at least one first pole tower, the first pole tower being a pole tower in the reference pole towers, and a pole tower other than all the first pole towers in all the passed pole towers being a second pole tower.

In some embodiments, in the embodiments of the present application, line fitting is performed on the reference pole towers based on location information of the reference pole towers, to obtain the target linear path. In some embodiments, in the embodiments of the present application, a path generated by performing line fitting on the reference pole towers is verified, to obtain the target linear path.

In S443, in the embodiments of the present application, the second pole tower is connected to the target linear path, to obtain the returning path. In the embodiments of the present application, the target linear path can be found between the target pole tower and the plurality of intermediate pole towers. The target linear path is shorter compared with a path formed along the pole towers. In this way, it is beneficial to reducing a flying distance of the unmanned aerial vehicle during returning, to save a power supply to the greatest extent, and ensure that the unmanned aerial vehicle still has sufficient power supply for returning when facing various emergency situations during returning, thereby improving reliability and safety of the unmanned aerial vehicle during returning.

In some embodiments, the generating a target linear path based on location information of the reference pole towers includes the following steps:

S4421: Generate a candidate linear path by fitting the location information of the reference pole towers, where the candidate linear path can be divided into a plurality of path segments by the reference pole towers.

S4422: Check, in sequence based on a returning direction, whether a target path segment satisfies the preset safety condition, where the target path segment is one of the plurality of path segments.

S4423: If the target path segment satisfies the preset safety condition, select, based on the returning direction, a path segment arranged after the target path segment as a new target path segment, and return to the step of checking, in sequence based on a returning direction, whether a target path segment satisfies the preset safety condition.

S4424: If the target path segment does not satisfy the preset safety condition, form, based on a direction opposite to the returning direction, path segments arranged before the target path segment into the target linear path.

In S4421, the reference pole towers are fitted to the candidate linear path based on a line fitting algorithm in the embodiments of the present application. In the embodiments of the present application, a perpendicular line of the candidate linear path is drawn through the reference pole tower, to obtain a perpendicular point, and the candidate linear path may be divided into one path segment by every two perpendicular points.

Referring to FIG. 6, the pole tower T1 to the pole tower T6 satisfy the preset density condition and the pole tower 7 does not satisfy the preset density condition. Therefore, the pole tower T1 to the pole tower T6 are reference pole towers. In the embodiments of the present application, a candidate linear path D0 from the pole tower T1 to the pole tower T6 is generated. Perpendicular lines perpendicular to the candidate linear path D0 are respectively drawn through the pole tower T1 to the pole tower T6 in sequence, where perpendicular points are respectively C1 to C6. The perpendicular point C1 and the perpendicular point C2 divide the candidate linear path D0 into a first path segment F1. The rest may be deduced by analogy. The candidate linear path D0 may be divided by the perpendicular points into the following path segments: a second path segment F2, a third path segment F3, a fourth path segment F4, and a fifth path segment F5.

In S4422, one path segment is sequentially selected from each path segment as the target path segment, and whether each target path segment satisfies the preset safety condition is sequentially checked based on the returning direction.

The target path segment is obtained through jointly constraint by a first reference pole tower and a second reference pole tower. For example, when the target path segment is the first path segment F1, a reference pole tower T1 corresponding to the perpendicular point C1 of the first path segment F1 is the first reference pole tower, and a reference pole tower T2 corresponding to the perpendicular point C2 is the second reference pole tower. When the target path segment is the second path segment F2, a reference pole tower T2 corresponding to the perpendicular point C2 of the second path segment F2 is the first reference pole tower, and a reference pole tower T3 corresponding to the perpendicular point C3 is the second reference pole tower. The rest can be deduced by analogy, and details are not described herein.

The checking, in sequence based on a returning direction, whether a target path segment satisfies the preset safety condition includes the following steps: determining a first vertical distance from the first reference pole tower to the candidate linear path and a second vertical distance from the second reference pole tower to the candidate linear path; determining whether the first vertical distance is less than a preset distance threshold and whether the second vertical distance is less than the preset distance threshold; and if the first vertical distance and the second vertical distance are both less than the preset distance threshold, determining that the target path segment satisfies the preset safety condition; or if either the first vertical distance or the second vertical distance is not less than the preset distance threshold, determining that the target path segment does not satisfy the preset safety condition

In S4423, if the target path segment satisfies the preset safety condition, it indicates that the unmanned aerial vehicle does not easily encounter an obstacle when returning according to the target path segment. It is relatively safe. Therefore, the target path segment can be at least used as a part of the target linear path. In the embodiments of the present application, after whether a current target path segment satisfies the preset safety condition is checked, a new target path segment is selected, and step S4422 is performed again to check whether the new target path segment satisfies the preset safety condition. The rest may be deduced by analogy. In the embodiments of the present application, whether all path segments satisfy the preset safety condition is checked, to find out path segments that can be combined into the target linear path.

In S4424, if the target path segment does not satisfy the preset safety condition, it indicates that the unmanned aerial vehicle easily encounters obstacles when returning according to the target path segment. The unmanned aerial vehicle cannot continue to return forward. Therefore, according to the direction opposite to the returning direction, the target linear path is formed by path segments arranged before the target path segment.

For example, the preset distance threshold is 2 meters. When the target path segment is the first path segment F1, a first vertical distance h1 from a first reference pole tower **T1** to the candidate linear path D0 is 0.5 meters and a second vertical distance h2 from a second reference pole tower T2 to the candidate linear path D0 is 0.5 meters. Because the first vertical distance h1 and the second vertical distance h2 are both less than the preset distance threshold, the first path segment F1 satisfies the preset safety condition.

Next, whether the second path segment F2, the third path segment F3 and the fourth path segment F4 satisfy the preset safety condition is sequentially checked according to the foregoing manner. After checking, the second path segment F2, the third path segment F3 and the fourth path segment F4 all satisfy the preset safety condition.

Then, in the embodiments of the present application, when the fifth path segment F5 is checked according to the foregoing manner, it is found that a first vertical distance h1 from a first reference pole tower T5 to the candidate linear path D0 is 0.5 meters and a second vertical distance h2 from a second reference pole tower T6 to the candidate linear path D0 is 2.5 meters. Because the second vertical distance h2 is greater than the preset distance threshold, the fifth path segment F5 does not satisfy the preset safety condition.

In the embodiments of the present application, the first path segment F1, the second path segment F2, the third path segment F3 and the fourth path segment F4 are formed into the target linear path according to the direction opposite to the returning direction.

In the embodiments of the present application, in all passed pole towers {T1, T2, T3, T7, T5, T6, T7} of the unmanned aerial vehicle, location fitting is performed on the pole tower T1 to the pole tower T5, to obtain a target linear path D1. Both the pole tower T6 and the pole tower T7 are second pole towers. Therefore, in the embodiments of the present application, the target linear path D1, the pole tower T6 and the pole tower T7 are connected to obtain the returning path.

In the embodiments of the present application, a plurality of adjacent pole towers that satisfy the preset density condition are combined to the greatest extent to generate the target linear path. The target linear path is shorter compared with a folded line path formed by simply connecting all the pole towers in series. In this way, a flying distance of the unmanned aerial vehicle can be shortened. In addition, a pole tower that constrains generation of the target linear path is not necessarily on the target linear path. Considering that the candidate linear path generated through fitting deviates from the pole tower, causing a part of the candidate linear path is not safe enough, in the embodiments of the present application, safety of the candidate linear path is checked in segments, to ensure that the target linear path has a relatively high safety degree. In this way, flight safety of the unmanned aerial vehicle can be ensured. In general, the returning path provided in the embodiments of the present application not only can ensure safety, but also can shorten a flying distance, thereby improving returning reliability, safety and stability of the unmanned aerial vehicle.

It should be noted that, in the foregoing implementations, the foregoing steps are not necessarily performed in a particular order. A person of ordinary skill in the art may understand according to the descriptions of the implementations of the present application that, in different implementations, the foregoing steps may be performed in different orders, that is, the steps may be performed in parallel, or may be performed interchangeably, or the like.

In another aspect of the embodiments of the present application, an embodiment of the present application provides an unmanned aerial vehicle returning apparatus. The unmanned aerial vehicle returning apparatus may be a software module. The software module includes several instructions that are stored in a memory. The processor may access the memory and invoke the instructions for execution, to implement the unmanned aerial vehicle returning method described in the foregoing implementations.

In some implementations, the unmanned aerial vehicle returning apparatus may alternatively be built by hardware devices. For example, the unmanned aerial vehicle returning apparatus may be built by one or two or more chips, and the chips may work in coordination with each other, to complete the unmanned aerial vehicle returning method described in the foregoing implementations. For another example, the unmanned aerial vehicle returning apparatus may be further built by various logic devices, such as a general-purpose processor, a digital signal processor (DSP), an application-specific integrated circuit (ASIC), a field programmable gate array (FPGA), a single-chip machine, an Acorn RISC machine (ARM), or another programmable logic device, a discrete gate or transistor logic, a discrete hardware component, or any combination of these components.

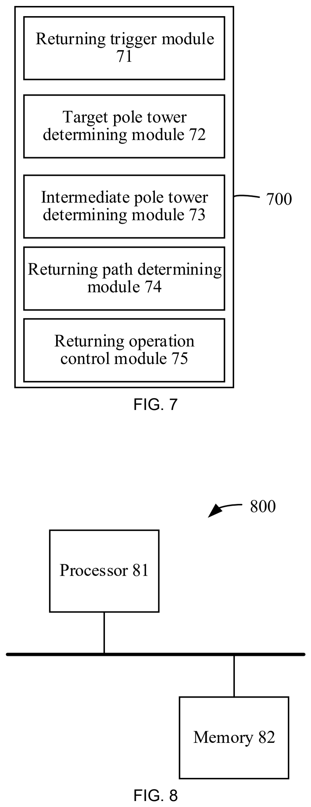

Referring to FIG. 7, an unmanned aerial vehicle returning apparatus 700 includes a returning trigger module 71, a target pole tower determining module 72, an intermediate pole tower determining module 73, a returning path determining module 74 and a returning operation control module 75.

The returning trigger module 71 is configured to obtain returning trigger information generated when an unmanned aerial vehicle inspects a target power line, where the target power line includes a plurality of pole towers deployed along the line. The target pole tower determining module 72 is configured to: in response to the returning trigger information, determine a pole tower that satisfies a preset returning condition in the plurality of pole towers as a target pole tower. The intermediate pole tower determining module 73 is configured to determine, based on the target pole tower, that a pole tower that the unmanned aerial vehicle passes by in an inspection process is an intermediate pole tower. The returning path determining module 74 is configured to generate a returning path based on location information of the target pole tower and location information of at least one of the intermediate pole tower. The returning operation control module 75 is configured to control, based on the returning path, the unmanned aerial vehicle to perform a returning operation.

The returning path provided in the embodiments of the present application is associated with pole towers. Usually, the pole towers are relatively safe location points. Therefore, the returning path provided in the embodiments of the present application is relatively safe, which can reduce a probability that the unmanned aerial vehicle collides with an obstacle during returning, thereby helping improve safety of returning flight of the unmanned aerial vehicle.

In some embodiments, the target pole tower determining module 72 is specifically configured to: in response to the returning trigger information, obtain an initial battery level of the unmanned aerial vehicle before inspection; determine a flying range based on the initial battery level; determine a farthest location point of the unmanned aerial vehicle on the target power line based on the flying range; determine a pole tower closest to the farthest location point and close to a takeoff point of the unmanned aerial vehicle as a candidate pole tower, where the preset returning condition is restricted by the candidate pole tower; and determine, based on the candidate pole tower, a pole tower that satisfies the preset returning condition as the target pole tower.

In some embodiments, the target pole tower determining module 72 is further specifically configured to: determine a current pole tower, where the current pole tower is a pole tower that the unmanned aerial vehicle currently passes through; determine whether location information of the current pole tower matches location information of the candidate pole tower; and if the location information of the current pole tower matches the location information of the candidate pole tower, determine that the current pole tower is the candidate pole tower, that the candidate pole tower satisfies the preset returning condition, and that the candidate pole tower is the target pole tower; or if the location information of the current pole tower does not match the location information of the candidate pole tower, obtain a real-time battery level change curve when the unmanned aerial vehicle reaches the current pole tower, and determine, based on the real-time battery level change curve and a preset battery level change curve, a pole tower that satisfies the preset returning condition as the target pole tower.

In some embodiments, the target pole tower determining module 72 is further specifically configured to: determine a deviation degree value between the real-time battery level change curve and a preset battery level change curve; and if the deviation degree value is less than or equal to a preset degree threshold, determine that the candidate pole tower is a pole tower that satisfies the preset returning condition, and that the candidate pole tower is the target pole tower; or if the deviation degree value is greater than a preset degree threshold, determine, based on a preset filtering condition, a pole tower that satisfies the preset returning condition as the target pole tower.

In some embodiments, the target pole tower determining module 72 is further specifically configured to: determine whether an $i^{th}$ pole tower and an $(i+1)^{th}$ pole tower satisfy the following formula:

$$Q - 2\left(Q - q_i\right) > 0$$

$$Q - 2\left(Q - k_{i+1}\right) < 0$$

$$k_{i+1} = q_i + \Delta k$$

if the $i^{th}$ pole tower and the $(i+1)^{th}$ pole tower satisfy the following formula, determine the $i^{th}$ pole tower as the target pole tower.

The $i^{th}$ pole tower is the current pole tower and the $(i+1)^{th}$ pole tower is a pole tower arranged after the current pole tower according to an inspecting direction of the unmanned aerial vehicle, $Q$ being an initial battery level, $q_i$ being a remaining battery level when the unmanned aerial vehicle flies to the $i^{th}$ pole tower, $k_{i+1}$ being a remaining battery level when the unmanned aerial vehicle flies to the $(i+1)^{th}$ pole tower in a normal environment situation, and $\Delta k$ being a battery level required for the unmanned aerial vehicle to fly from the $i^{th}$ pole tower to the $(i+1)^{th}$ pole tower in the normal environment situation.

In some embodiments, the returning path determining module 74 is specifically configured to: search all passed pole towers for passed pole towers that are in a normal environment and satisfy a preset density condition as reference pole towers, where the passed pole towers include the target pole tower and the intermediate pole tower; generate a target linear path based on location information of the reference pole towers, where the target linear path is a local linear path that is the shortest when a preset safety condition is satisfied, the target linear path being obtained through constraint by at least one first pole tower, the first pole tower being a pole tower in the reference pole towers, and a pole tower other than all the first pole towers in all the passed pole towers being a second pole tower; and generate the returning path based on location information of the second pole tower and the target linear path.

In some embodiments, the returning path determining module 74 is further specifically configured to: generate a candidate linear path by fitting the location information of the reference pole towers, where the candidate linear path can be divided into a plurality of path segments by the reference pole towers; check, in sequence based on a returning direction, whether a target path segment satisfies the preset safety condition, where the target path segment is one of the plurality of path segments; and if the target path segment satisfies the preset safety condition, select, based on the returning direction, a path segment arranged after the target path segment as a new target path segment; or if the target path segment does not satisfy the preset safety condition, form, based on a direction opposite to the returning direction, path segments arranged before the target path segment into the target linear path.

In some embodiments, the target path segment is obtained through constraint by a first reference pole tower and a second reference pole tower, and the returning path determining module 74 is further specifically configured to: determine a first vertical distance from the first reference pole tower to the candidate linear path and a second vertical distance from the second reference pole tower to the candidate linear path; determine whether the first vertical distance is less than a preset distance threshold and whether the second vertical distance is less than the preset distance threshold; and if the first vertical distance and the second vertical distance are both less than the preset distance threshold, determine that the target path segment satisfies the preset safety condition; or if either the first vertical distance or the second vertical distance is not less than the preset distance threshold, determine that the target path segment does not satisfy the preset safety condition.

In some embodiments, each of the passed pole towers is configured with an environment status identifier, and the returning path determining module 74 is further specifically configured to: search all the passed pole towers for passed pole towers whose environment status identifiers are normal state identifiers as to-be-determined pole towers; place at least more than two to-be-determined pole towers whose pole tower sequence numbers are consecutive in a corresponding preset queue; determine a quantity of to-be-determined pole towers included in each of the preset queue; and deleting a preset queue whose quantity is less than a preset quantity threshold, and reserve a preset queue whose quantity exceeds the preset quantity threshold as a target queue, where to-be-determined pole towers in the target queue satisfy the preset density condition and the to-be-determined pole towers in the target queue are the reference pole towers.

It should be noted that, the foregoing unmanned aerial vehicle returning apparatus can perform the unmanned aerial vehicle returning method provided in the implementations of the present application, and has corresponding functional modules and beneficial effects for performing the method. For technical details that are not elaborated in the implementations of the unmanned aerial vehicle returning apparatus, refer to the unmanned aerial vehicle returning method provided in the implementations of the present application.

Referring to FIG. 8, FIG. 8 is a schematic diagram of a structure of an unmanned aerial vehicle according to an embodiment of the present application. The unmanned aerial vehicle 800 includes one or more processors 81 and a memory 82. The memory 82 is connected to the one or more processors 81, for example, is connected to the processor through a bus.

The processor 81 is configured to support the unmanned aerial vehicle to perform corresponding functions in the method in the foregoing method embodiments. The processor 81 may be a central processing unit (CPU), a network processor (NP), a hardware chip or any combination thereof. The hardware chip may be an application-specific integrated circuit (ASIC), a programmable logic device (PLD) or a combination thereof. The PLD may be a complex programmable logic device (CPLD), a field-programmable gate array (FPGA), a generic array logic (GAL) or any combination thereof.

The memory 82 is configured to store program code and the like. The memory 82 may include a volatile memory (VM), for example, a random access memory (RAM). The memory may alternatively include a non-volatile memory (NVM), for example, a read-only memory (ROM), a flash memory, a hard disk drive (HDD) or a solid-state drive (SSD). The memory may alternatively include a combination of the foregoing types of memories.

The memory 82 may be configured to store a non-volatile software program, a non-volatile computer-executable program, and a module, for example, a program instruction/module corresponding to the unmanned aerial vehicle returning method in the embodiments of the present application. The processor runs the non-volatile software program, instruction, and module stored in the memory, to perform various functional applications and data processing of the unmanned aerial vehicle returning method and the unmanned aerial vehicle returning apparatus, that is, implement functions of modules or units of the unmanned aerial vehicle returning method and the unmanned aerial vehicle returning apparatus that are provided in the foregoing method embodiments.

The memory 82 may include a program storage area and a data storage area. The program storage area may store an operating system and an application program required by at least one function. The data storage area may store data created according to use of the unmanned aerial vehicle returning apparatus. In some embodiments, the memory optionally includes memories remotely disposed relative to the processor and the remote memories may be connected to the unmanned aerial vehicle returning apparatus through a network. Examples of the network include, but are not limited to, the Internet, an intranet, a local area network, a mobile communication network and a combination thereof.

The one or more modules are stored in the memory, and when being executed by the one or more processors, perform the unmanned aerial vehicle returning method in any of the foregoing method embodiments, for example, perform method steps described in the foregoing method embodiments, and implement functions of the modules described in the foregoing apparatus embodiments.

An embodiment of the present application further provides a computer-readable storage medium. The computer-readable storage medium stores a computer program. The computer program includes program instructions. When executed by a computer, the program instructions cause the computer to perform the method described in the foregoing embodiments.

A person of ordinary skill in the art is to understand that all or a part of the processes of the method in the foregoing embodiments may be implemented by a program instructing relevant hardware. The program may be stored in a computer-readable storage medium. When the program is run, the processes of the method in the foregoing embodiments are performed. The storage medium may be a magnetic disk, an optical disc, a read-only memory (ROM), a random access memory (RAM), or the like.

The foregoing disclosed embodiments are merely preferred embodiments of the present application, and it is clear that, the scope of the claims of the present application is not limited thereto. Therefore, any equivalent modification made according to the claims of the present application shall fall within the scope of the present application.

### Claims

1. An unmanned aerial vehicle returning method, comprising:

    obtaining returning trigger information generated when an unmanned aerial vehicle inspects a target power line, wherein the target power line comprises a plurality of pole towers deployed along the line;
    in response to the returning trigger information, determining a pole tower that satisfies a preset returning condition in the plurality of pole towers as a target pole tower;
    determining, based on the target pole tower, that a pole tower that the unmanned aerial vehicle passes by in an inspection process is an intermediate pole tower;
    generating a returning path based on location information of the target pole tower and location information of at least one of the intermediate pole tower; and
    controlling, based on the returning path, the unmanned aerial vehicle to perform a returning operation.

2. The returning method according to claim 1, wherein the in response to the returning trigger information, determining a pole tower that satisfies a preset returning condition in the plurality of pole towers as a target pole tower comprises:

    in response to the returning trigger information, obtaining an initial battery level of the unmanned aerial vehicle before inspection;
    determining a flying range based on the initial battery level;
    determining a farthest location point of the unmanned aerial vehicle on the target power line based on the flying range;
    determining a pole tower closest to the farthest location point and close to a takeoff point of the unmanned aerial vehicle as a candidate pole tower, wherein the preset returning condition is restricted by the candidate pole tower; and
    determining, based on the candidate pole tower, a pole tower that satisfies the preset returning condition as the target pole tower.

3. The returning method according to claim 2, wherein the determining, based on the candidate pole tower, a pole tower that satisfies the preset returning condition as the target pole tower comprises:

determining a current pole tower, wherein the current pole tower is a pole tower that the unmanned aerial vehicle currently passes through;

determining whether location information of the current pole tower matches location information of the candidate pole tower; and

if the location information of the current pole tower matches the location information of the candidate pole tower, determining that the current pole tower is the candidate pole tower, that the candidate pole tower satisfies the preset returning condition, and that the candidate pole tower is the target pole tower; or

if the location information of the current pole tower does not match the location information of the candidate pole tower, obtaining a real-time battery level change curve when the unmanned aerial vehicle reaches the current pole tower, and determining, based on the real-time battery level change curve and a preset battery level change curve, a pole tower that satisfies the preset returning condition as the target pole tower.

4. The returning method according to claim 3, wherein the determining, based on the real-time battery level change curve and a preset battery level change curve, a pole tower that satisfies the preset returning condition as the target pole tower comprises:

determining a deviation degree value between the real-time battery level change curve and a preset battery level change curve; and

if the deviation degree value is less than or equal to a preset degree threshold, determining that the candidate pole tower is a pole tower that satisfies the preset returning condition, and that the candidate pole tower is the target pole tower; or

if the deviation degree value is greater than a preset degree threshold, determining, based on a preset filtering condition, a pole tower that satisfies the preset returning condition as the target pole tower.

5. The returning method according to claim 4, wherein the determining, based on a preset filtering condition, a pole tower that satisfies the preset returning condition as the target pole tower comprises:
determining whether an $i^{th}$ pole tower and an $(i+1)^{th}$ pole tower satisfy the following formula:

$$Q - 2(Q - q_i) > 0$$

$$Q - 2(Q - k_{i+1}) < 0$$

$$k_{i+1} = q_i + \Delta k$$

if the $i^{th}$ pole tower and the $(i+1)^{th}$ pole tower satisfy the following formula, determining the $i^{th}$ pole tower as the target pole tower, wherein

the $i^{th}$ pole tower is the current pole tower and the $(i+1)^{th}$ pole tower is a pole tower arranged after the current pole tower according to an inspecting direction of the unmanned aerial vehicle, $Q$ being an initial battery level, $q_i$ being a remaining battery level when the unmanned aerial vehicle flies to the $i^{th}$ pole tower, $k_{i+1}$ being a remaining battery level when the unmanned aerial vehicle flies to the $(i+1)^{th}$ pole tower in a normal environment situation, and $\Delta k$ being a battery level required for the unmanned aerial vehicle to fly from the $i^{th}$ pole tower to the $(i+1)^{th}$ pole tower in the normal environment situation.

6. The returning method according to any of claims 1 to 4, wherein the generating a returning path based on location information of the target pole tower and location information of at least one of the intermediate pole tower comprises:

searching all passed pole towers for passed pole towers that are in a normal environment and satisfy a preset density condition as reference pole towers, wherein the target pole tower and the intermediate pole tower are both passed pole towers;

generating a target linear path based on location information of the reference pole towers, wherein the target linear path is a local linear path that is the shortest when a preset safety condition is satisfied, the target linear path being obtained through constraint by at least one first pole tower, the first pole tower being a pole tower in the reference pole towers, and a pole tower other than all the first pole towers in all the passed pole towers being a second pole tower; and

generating the returning path based on location information of the second pole tower and the target linear path.

7. The returning method according to claim 6, wherein the generating a target linear path based on location information of the reference pole towers comprises:

generating a candidate linear path by fitting the location information of the reference pole towers, wherein the candidate linear path can be divided into a plurality of path segments by the reference pole towers; checking, in sequence based on a returning direction, whether a target path segment satisfies the preset safety condition, wherein the target path segment is one of the plurality of path segments; and if the target path segment satisfies the preset safety condition, selecting, based on the returning direction, a path segment arranged after the target path segment as a new target path segment, and returning to the step of checking, in sequence based on a returning direction, whether a target path segment satisfies the preset safety condition; or if the target path segment does not satisfy the preset safety condition, forming, based on a direction opposite to the returning direction, path segments arranged before the target path segment into the target linear path.

8. The returning method according to claim 7, wherein the target path segment is obtained through constraint by a first reference pole tower and a second reference pole tower, and the checking, in sequence based on a returning direction, whether a target path segment satisfies the preset safety condition comprises:

determining a first vertical distance from the first reference pole tower to the candidate linear path and a second vertical distance from the second reference pole tower to the candidate linear path; determining whether the first vertical distance is less than a preset distance threshold and whether the second vertical distance is less than the preset distance threshold; and if the first vertical distance and the second vertical distance are both less than the preset distance threshold, determining that the target path segment satisfies the preset safety condition; or if either the first vertical distance or the second vertical distance is not less than the preset distance threshold, determining that the target path segment does not satisfy the preset safety condition.

9. The returning method according to claim 6, wherein each of the passed pole towers is configured with an environment status identifier, and the searching all passed pole towers for passed pole towers that are in a normal environment and satisfy a preset density condition as reference pole towers comprises:

searching all the passed pole towers for passed pole towers whose environment status identifiers are normal state identifiers as to-be-determined pole towers; placing at least more than two to-be-determined pole towers whose pole tower sequence numbers are consecutive in a corresponding preset queue; determining a quantity of to-be-determined pole towers comprised in each of the preset queue; and deleting a preset queue whose quantity is less than a preset quantity threshold, and reserving a preset queue whose quantity exceeds the preset quantity threshold as a target queue, wherein to-be-determined pole towers in the target queue satisfy the preset density condition and the to-be-determined pole towers in the target queue are the reference pole towers.

10. An unmanned aerial vehicle, comprising:

a body; and
an arm, connected to the body;
a wing, disposed on the arm and configured to provide flying power for the unmanned aerial vehicle; and
a sensor module, disposed on the body and configured to collect sensor data;
an aircraft communication module, disposed on the body; and
a flying control module, comprising a memory and a processor, wherein the processor is communicatively connected to the sensor module, the aircraft communication module and the memory separately, the processor being configured to execute one or more computer programs stored in the memory, and when executing the one or more computer programs, the processor causing the unmanned aerial vehicle to implement the unmanned aerial vehicle returning method according to any of claims 1 to 9.

11. A computer-readable storage medium, wherein the computer-readable storage medium stores a computer program, the computer program comprising program instructions, and the computer program, when executed by a processor, causing the processor to perform the unmanned aerial vehicle returning method according to any of claims 1 to 9.

FIG. 1

FIG. 2a

FIG. 2b

```
┌─────────────────────┐          ┌─────────────────────┐
│   Sensor module     │          │     Aircraft        │
│      134            │          │  communication      │
│                     │          │   module 135        │
└──────────┬──────────┘          └──────────┬──────────┘
           │                                │
           │      ┌─────────────────────┐   │
           │      │                     │   │
           └──────┤   Flying control    ├───┘
                  │    module 136       │
                  └─────────────────────┘
```

FIG. 3

```
┌───────────────────────────────────────────────────┐
│  Obtain returning trigger information generated     │── S41
│  when an unmanned aerial vehicle inspects a target  │
│  power line                                         │
└───────────────────────────────────────────────────┘
                          │
                          ▼
┌───────────────────────────────────────────────────┐
│  In response to the returning trigger information,  │── S42
│  determine a pole tower that meets a preset         │
│  returning condition in a plurality of pole towers  │
│  as a target pole tower                             │
└───────────────────────────────────────────────────┘
                          │
                          ▼
┌───────────────────────────────────────────────────┐
│  Determine, based on the target pole tower, that a  │── S43
│  pole tower that the unmanned aerial vehicle passes │
│  by in an inspection process is an intermediate     │
│  pole tower                                         │
└───────────────────────────────────────────────────┘
                          │
                          ▼
┌───────────────────────────────────────────────────┐
│  Generate a returning path based on location        │── S44
│  information of the target pole tower and location  │
│  information of at least one of the intermediate    │
│  pole tower                                         │
└───────────────────────────────────────────────────┘
                          │
                          ▼
┌───────────────────────────────────────────────────┐
│  Control, based on the returning path, the unmanned │── S45
│  aerial vehicle to perform a returning operation    │
└───────────────────────────────────────────────────┘
```

FIG. 4

FIG. 5

Candidate linear path D0

FIG. 6

Returning trigger module 71

Target pole tower determining module 72

Intermediate pole tower determining module 73

— 700

Returning path determining module 74

Returning operation control module 75

FIG. 7

— 800

Processor 81

Memory 82

FIG. 8

Europäisches
Patentamt

European
Patent Office

Office européen
des brevets

# EUROPEAN SEARCH REPORT

Application Number

EP 25 21 7760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 516 354 A (NO 60 INST HEADQUARTERS GENERAL STAFF PLA) 15 April 2015 (2015-04-15) | 1,10,11 | INV. G05D1/227 G05D1/243 |
| Y | * claims 1,3; figure 2 * | 2 | G05D1/85 |
| A | | 3-9 | G05D105/80 |
| | ----- | | G05D107/70 |
| Y | AU 2016 314 770 A1 (COMMW SCIENT IND RES ORG [AU]) 29 March 2018 (2018-03-29) * claims 13-15; figure 6 * | 2 | G05D109/25 G08G5/22 G08G5/265 |
| | ----- | | G08G5/32 |
| Y | CN 116 719 339 A (STATE GRID JIANGSU ELECTRIC POWER CO LTD TAIZHOU POWER SUPPLY BRANCH E) 8 September 2023 (2023-09-08) * paragraph [0234] - paragraph [0236]; claim 4 * | 2 | G08G5/53 G08G5/54 G08G5/55 G08G5/57 G08G5/59 B64U10/00 B64U70/92 B64U80/20 |
| | ----- | | |

TECHNICAL FIELDS
SEARCHED (IPC)

G05D

The present search report has been drawn up for all claims

| Place of search | Date of completion of the search | Examiner |
|---|---|---|
| Munich | 16 February 2026 | Mallet, Philippe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................

& : member of the same patent family, corresponding
document

EPO FORM 1503 03.82 (P04C01)

Europäisches
Patentamt

European
Patent Office

Office européen
des brevets

# EUROPEAN SEARCH REPORT

**Application Number**

EP 25 21 7760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | | | B64U80/25 |
| | | | **TECHNICAL FIELDS SEARCHED (IPC)** |

The present search report has been drawn up for all claims

| Place of search | Date of completion of the search | Examiner |
|---|---|---|
| Munich | 16 February 2026 | Mallet, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                       

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 7760

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2026

| Patent document cited in search report | | Publication date | Patent family member(s) | | Publication date |
|---|---|---|---|---|---|
| CN 104516354 | A | 15-04-2015 | NONE | | |
| AU 2016314770 | A1 | 29-03-2018 | AU | 2016314770 A1 | 29-03-2018 |
| | | | EP | 3345064 A1 | 11-07-2018 |
| | | | US | 2018275654 A1 | 27-09-2018 |
| | | | WO | 2017035590 A1 | 09-03-2017 |
| CN 116719339 | A | 08-09-2023 | NONE | | |

EPO FORM P0459

For more details about this annex : see Official Journal of the European Patent Office, No. 12/82